(19) **Europäisches Patentamt**
**European Patent Office**
**Office européen des brevets**

(11)  **EP 4 363 816 B1**

(12) **EUROPEAN PATENT SPECIFICATION**

(45) Date of publication and mention
of the grant of the patent:
**05.08.2026  Bulletin 2026/32**

(21) Application number: **22735224.2**

(22) Date of filing: **30.06.2022**

(51) International Patent Classification (IPC):
**G01K 1/143** *(2021.01)*    **G01K 1/02** *(2021.01)*
**F24H 15/225** *(2022.01)*

(52) Cooperative Patent Classification (CPC):
**G01K 1/143; F24H 15/225; G01K 1/026;**
F24D 2220/042; F24D 2220/08; F24D 2240/26

(86) International application number:
**PCT/GB2022/051689**

(87) International publication number:
**WO 2023/275557 (05.01.2023 Gazette 2023/01)**

(54) **TEMPERATURE SENSOR, HEATING SYSTEM AND CONTROLLER**

TEMPERATURSENSOR, HEIZSYSTEM UND STEUERGERÄT

CAPTEUR DE TEMPÉRATURE, SYSTÈME DE CHAUFFAGE ET DISPOSITIF DE COMMANDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **01.07.2021  GB 202109554**

(43) Date of publication of application:
**08.05.2024  Bulletin 2024/19**

(60) Divisional application:
**26180324.1 / 4 779 229**

(73) Proprietor: **Mixergy Limited**
**Oxfordshire OX9 3EZ (GB)**

(72) Inventors:
• **ARMSTRONG, Peter**
**Thame Oxfordshire OX9 3EZ (GB)**
• **DRUMMOND, Steve**
**Thame Oxfordshire OX9 3EZ (GB)**

(74) Representative: **Mathys & Squire**
**32 London Bridge Street**
**The Shard**
**London SE1 9SG (GB)**

(56) References cited:
WO-A1-2006/053386      WO-A1-2012/081014
DE-A1- 3 723 161        US-A1- 2020 333 045
US-A1- 2020 359 906      US-A1- 2020 408 611

• GUNN KELLY ET AL: "FINAL REPORT:
Intelligent, Networked, Retrofittable Water Heater
Controller", 30 April 2018 (2018-04-30), St. Paul,
MN (USA), XP093349582, Retrieved from the
Internet <URL:https://www.mncee.org/sites/
default/files/report-files/504412.pdf> [retrieved
on 20251223]

**Description**

The present disclosure relates to a water heating system, a hot water tank controller and a sensor and sensor arrangement for measuring a temperature distribution of fluid within a vessel. In particular, the disclosure describes a water heating system ready to receive a retrofittable hot water tank controller which may determine information about the water heating system to which it is retrofitted. The disclosure also describes an extensible sensor for measurement of temperature distributions within a vessel. The sensor may permit determination the amount of useful energy which can be recovered for domestic hot water or space heating applications along with cooling applications where chilled water is stored.

**Background**

For accurate measurement and monitoring of useable energy content within a stratified fluid a number of temperature measurements at discrete intervals down the length of the tank is required. The challenge is to facilitate all of these measurements without requiring multiple signal lines back to a central data acquisition or measurement system. In the case of a hot water tank, it is advantageous to arrange temperature sensing arrays on a flexible and adhesive strip. However, the material cost of the strip is influenced by the number of channels (also referred to as tracks or lines) on the strip, which affects both the width of the strip and the complexity of the connection between the strip and any data acquisition or measurement system.

For a typical domestic hot water tank, anywhere between 8 to 12 sensors located at even linear intervals might be required to infer the complete temperature distribution throughout the system with sufficient resolution. For larger commercial applications, this number might be 20 or more. Having to arrange more and more tracks or lines as the length of the sensor increases means that the strip has to progressively increase in width. This makes product management challenging since multiple sensor variants are required depending upon the vessel dimensions and number of individual sensor elements needed. Examples of temperature sensor arrays for water heating systems are known from the following prior art: US2020/333045A1, US2020/408611A1, WO2006/053386A1 and WO2012/081014A1.

The present disclosure aims to ameliorate some or all of the above-mentioned problems.

**Summary of the invention**

Embodiments of the present invention are set out in the appended claims.

According to the claimed invention, there may be provided a water heating system comprising: a vessel for holding water and for receiving heat from one or more heat sources for heating water in the vessel; a sensor comprising a plurality of temperature sensing elements for sensing a distribution of temperatures in the vessel; a connector for connecting the sensor to a retrofittable tank controller; and wherein the water heating system is configured to provide one or more characteristics of the water heating system to a retrofittable tank controller such that a retrofittable tank controller connected to the sensor and in receipt of the characteristics of the water heating system can determine from the distribution of temperatures in the vessel a quantity of useable heat stored in the vessel.

The sensor may be configured to provide one or more characteristics of the water heating system to a retrofittable tank controller.

According to the claimed invention, the water heating system further comprises one or more of: one or more fixed value resistors encoding one or more characteristics of the water heating system; an EEPROM programmed with the one or more characteristics of the water heating system; a visual identifier, preferably a QR code or a barcode, configured to encode one or more characteristics of the water heating system.

The one or more characteristics may comprise one or more of: a characteristic of the vessel; a volume of the vessel; a height of the vessel; a diameter or width of the vessel; an indication of a footprint of a vessel; a manufacturer of the vessel; an identity of the vessel; a shape of the vessel; a characteristic of the one or more heat sources; a number of heat sources; a type or types of the heat sources; a characteristic of the sensor; a number of temperature sensing elements of the sensor; a length of the sensor; a spacing between temperature sensing elements of the sensor.

The sensor is preferably configured to provide a height of the vessel or a number of temperature sensing elements of the sensor or a length of the sensor or a vessel volume based on a length of the sensor to a retrofittable tank controller.

The sensor or another means may be configured to provide an indication of a footprint of the vessel and optionally a characteristic of the one or more heat sources to a retrofittable tank controller.

The water heating system may comprise a mechanical thermostat with a non-resettable high limit for controlling one or more heat sources for heating water in the vessel in a configuration without a retrofittable tank controller.

The water heating system may comprise one or more heat sources for heating water in the vessel, optionally one or more of: an electric heater disposed in the vessel; a gas boiler; a heat pump; a solar thermal device; and a solar photovoltaic device.

The one or more heat sources may be configured to provide heat to the vessel in dependence on the mechanical thermostat.

A connection between the one or more heat sources and the mechanical thermostat may comprise a node for connection of a retrofittable tank controller.

The sensor may comprise one or more of: a flexible substrate; a flexible circuit; an adhesive layer for attachment of the sensor to the vessel; and a flexible printed circuit board.

The sensor may comprise an array of sensing elements, each element having a temperature-dependent parameter; a cascaded array of latches, each latch being configured to control a switching element corresponding to a one of the sensing elements thereby to selectively provide a current path to the one of the sensing elements; a signal line to which each of the sensing elements is electrically connected for providing a signal to a measurement module.

According to the claimed invention, there is provided a water heating system as aforementioned, further comprising a retrofittable tank controller as aforementioned.

The disclosure extends to methods and/or apparatus and/or systems as herein described with reference to the accompanying drawings.

Aspects and embodiments of the disclosure will now be described purely by way of example, with reference to the accompanying drawings.

**Brief description of the drawings**

Figure 1 illustrates a sensor according to an aspect of the invention.
Figure 2 illustrates an extensible sensor arrangement according to an aspect of the invention.
Figure 3 shows diagrams of exemplary waveforms propagating within the sensor.
Figure 4 shows a thermal cutout arrangement according to an aspect of the invention.
Figure 5 shows a diagram of a heating system in a first configuration.
Figure 6 shows a diagram of a heating system in a second configuration.
Figure 7 shows a diagram of an alternative heating system.
Figure 8 shows an example of a sensor.
Figure 9 shows an alternative sensor.
Figure 10 shows an example of a sensor in more detail.
Figure 11 shows typical temperature profiles in a tank with a gas boiler as heat source,
Figure 12 shows typical temperature profiles in a tank with a heat pump as heat source.

**Detailed description**

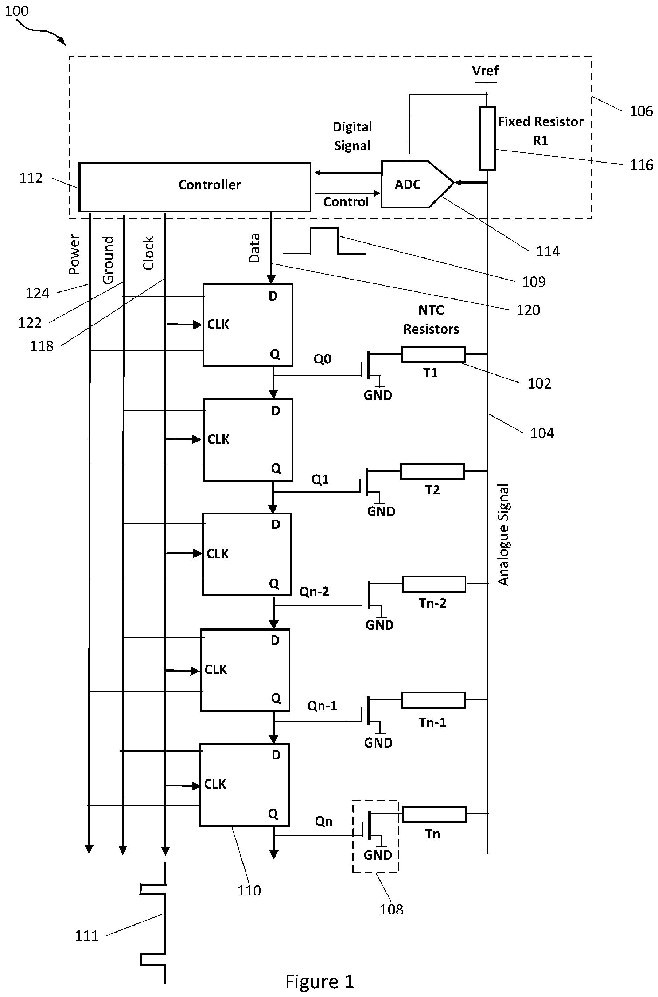

With reference to Figure 1, a circuit comprising a sensor 100 is illustrated which comprises an array of sensing elements 102. In this case a linear array of evenly spaced sensing elements 102 is shown. The sensing elements are configured to provide spatially separated temperature measurements, for example, along a height of a hot water tank.

The sensing elements 102 may be resistors which exhibit a positive or negative temperature coefficient, such as a thermistor. In the illustrated example, the sensing elements 102 are negative temperature coefficient (NTC) resistors.

A signal line 104 is connected to one side of each of the sensing elements 102. The signal line is a shared signal line 104 shared by each of the sensing elements 102. The signal line 104 is configured to carry a signal from the sensing elements 102 to a measurement module 106.

A switching element 108, such as a transistor, is connected to the other side (i.e. the side not connected to the signal line 104) of each of the sensing elements 102. The purpose of the switching element 108 is to provide a current path through any individual sensing element on a selective basis. That is, the switching elements 108 provide for individual addressability of the sensing elements 102, so each sensing element 102 can be read in turn. The switching elements 108 may be, for example, MOSFETs or bipolar transistors or any other suitable switch.

A latch 110 is provided connected to each switching element 108. An output of the latch 110 feeds into a control of the switching element, for example into the control input or gate of each switching element 108. The switching element 108 then selectively either completes a circuit path to through the switching element or breaks the circuit by connecting the switching element 108 to ground in dependence on the output of the latch 110.

A ground line 122 is provided for grounding components of the sensors. This may be a common ground line 122 shared between components. The ground line is shown in Figure 1 as shared between the latches, with individual paths to ground shown for the switching elements, for the sake of simplicity, but it will be understood the switching elements (and indeed any other components) may too be grounded via the common ground line 122.

The latches 110 are cascaded - that is, an output of the latch 110 feeds into the input of the next latch 110 in the array. The latches 110 may, for example be D flip-flops, set-reset latches, data or delay latches, toggle latches, T flip-flops or any other suitable latches. D flip-flops are preferred since they capture an input data pulse 109 at a definite portion of a clock cycle and output that captured value, the output value only changing when a new data pulse is captured. D flip-flops typically form the basis of a shift register. Figure 1 illustrates a single output from each latch which feeds in the subsequent latch. It will be appreciated that latches such as D flip-flops can have two outputs, to output a signal Q and its complement signal $\overline{Q}$, although the complement signal need not feed forward.

The latches 110 (for example, D flip-flops) are connected together to cascade a binary signal which in turn sequentially toggles the input of each switching element 108. The cascade of latches 110 may be configured to thus form a shift register. A data line 120 feeds the cascaded latches 110 which are in turn controlled by a common clock signal 111, as will be described in more detail below. The clock signal 111 may be fed to each of the latches by a clock line 118 shared by the latches 110. The latches may be powered and receive power from a common power line 124.

The measurement module 106 may take the signals received through the signal line 104 and translate these into measurement values. In the illustrated example, the measurement module 106 comprises a controller 112, an analogue to digital converter 114, and a fixed resistor 116.

The analogue to digital converter 114 is connected to the signal line 104 and reads the voltage across the voltage divider provided by the fixed resistor 116 and the presently selected sensing element 102. The analogue to digital converter 114 provides a digital signal embodying this information to the controller 112.

The controller 112 determines the resistance of the selected sensing elements 102 based on the information received from the analogue to digital converter 114. The controller 112 then determines the temperature based on the determined resistance.

The controller 112 may include a memory to store data received from the analogue to digital converter 114 or generated by the controller 112 itself. The controller 112 may further be configured to determine a temperature distribution in the hot water tank from the measured temperatures, as will be described in more detail below. The controller may be further configured to transmit data, by wired or wireless means, to a computing device or server for example for further processing, remote storage or for display to a user.

The controller 112 may also generate a clock signal 111 and generate the initial data pulse which is input to the array of latches 110 to initiate the sweep through the sensing elements 102. The controller 112 may also control the analogue to digital converter 114.

In one example, the sensor is integrated onto flexible strips, such as a strip of composite copper, polymer composite (e.g. Espanex or Kapton) and any of the aforementioned circuitry is available to be printed onto the flexible strip surface prior to etching in a ferric chloride bath. The circuitry comprising the sensor is arranged such that an adhesive layer is appended to the wall surface of the vessel, thereby allowing a layer of flexible polymer above the adhesive layer to be in thermal contact with the vessel wall. Above the flexible polymer layer, a layer of copper and/or printed circuit board trace is present with a layer of electrical components is provided above therein. It is therefore envisaged that sensors composed on flexible strips of adhesive tape may be manufactured by a continuous method of production.

By indexing through each sensing element, a set of signals can be provided to a measurement module 106 in order to determine a temperature distribution. Each signal from the sensing elements 102 carried on the signal line 104 can be used to determine a temperature at the location of the particular sensor. Within the measurement module 106, an interpolant function can be used to estimate intermediary temperature values so that calculus can be applied to accurately determine a temperature distribution of the tank as a function of height. The measurement module 106 can thus calculate, or permit to be calculated, useful information about the performance or status of the hot water tank, such as total energy content or the amount of useful hot water volume that is available to be drawn.

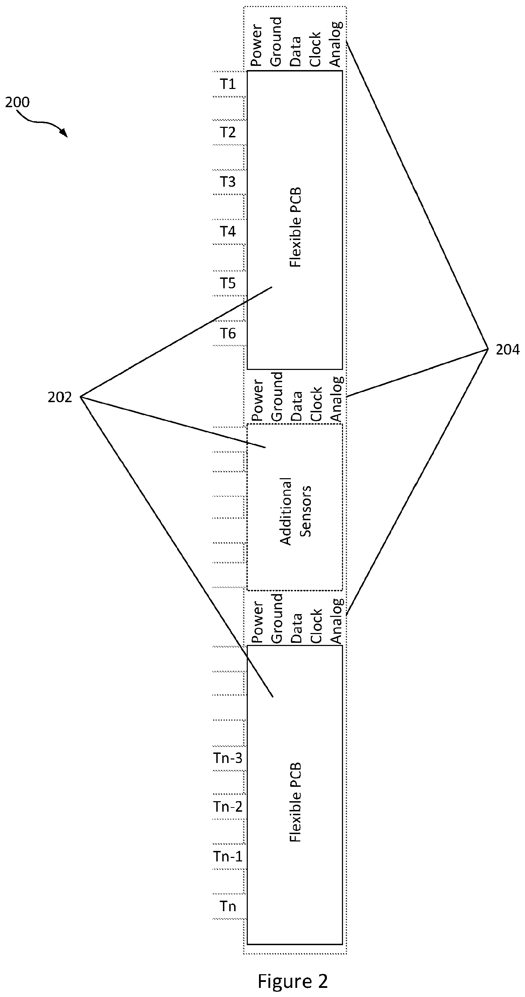

The sensor described above permits indexing sequentially between each switching element 108 without requiring an ever-increasing number of control lines 204 as the length of the sensor strip increases. The number of inputs at one side of the sensor, for example, the data input line to the first latch 110, the input to the clock line 118, the power line 124 to the latches 110 and/or other powered components, a first end of the ground line 122 to which the switching elements 108 may switch the sensing elements 102, and a first end of the signal line 104, is the same as the number of outputs at the other end of the sensor, for example the data output line from the final latch 110, the output of the clock line 118, the output of the power line 124, a second end of the ground line 122, and a second end of the signal line 104. This permits multiple sensors to be connected together (i.e. the inputs of one sensor are connected to the outputs of another sensor) to provide an extended sensor arrangement 200, as illustrated in Figure 2.

By connecting an arbitrary number of the above-described sensors together, a sensor arrangement 200 of arbitrary length can be arrived at without needing to increase the number of lines 204, or make any commensurate increase in width of the sensors to accommodate additional control as the sensor arrangement 200 is extended. The present disclosure therefore provides a particularly simple sensor and sensor arrangement 200 for use with vessels of different size. Only one measurement module 106 is required for a sensor arrangement 200 of arbitrary length since input to the later sensors in the arrangement can be provided by connection to the outputs of the previous sensor to which it is connected. The outputs of one sensor may be soldered to the corresponding inputs of a next sensor in order to provide the extended sensor arrangement 200.

Figure 2 shows a sensor arrangement 200 as it might appear on an arbitrarily long flexible strip. In practice a complete strip will comprise multiple segments 202, typically each a separately manufactured flexible PCB comprising a sensor as described above, which have been soldered together.

The strips on which the sensors are provided may be printed circuit board and are preferably flexible PCBs suitable for affixing to the outside of a hot water tank.

A sensor arrangement 200 may be formed of any number of individual temperature sensing elements 102, or segments 202 comprising one or more sensing elements 102, with only a limited number of lines 204 that does not grow as the length of the strip, or number of segments 202 used, increases. Preferably fewer than ten lines 204, more preferable fewer than eight lines 204 and in the illustrated embodiment only five lines 204 are required as input to each strip and as output from each strip as illustrated: a power line 124, a ground line 122, a data line 120, a clock line 118 and a signal line 104. This allows multiple strips to be connected to form a single sensor of arbitrary length without the need to provide increasing numbers of lines 204.

Typically, the length of a single sensor or segment 202 of the arrangement will be limited by the fabrication methods available. Each segment 202 may be between around 50mm to 1000mm long, preferably between 100mm and 750mm long and yet more preferable between 200mm and 300mm long. By reducing the number of tracks to only 5 signals, the amount of work involved when soldering the segments 202 together when compared to an alternate scheme where every individual element has its own analogue going back to a measurement module 106 is significantly reduced, permitting simpler and cheaper installation of the sensors. The length of the sensor arrangement 200 can be easily changed to fit the size of the vessel.

As well as being configured to couple of other similar sensors, each sensor might also be cut to length - which provides further flexibility, for example if the desired length of the sensor arrangement 200 is not an exact multiple of the length of each individual sensor or segment.

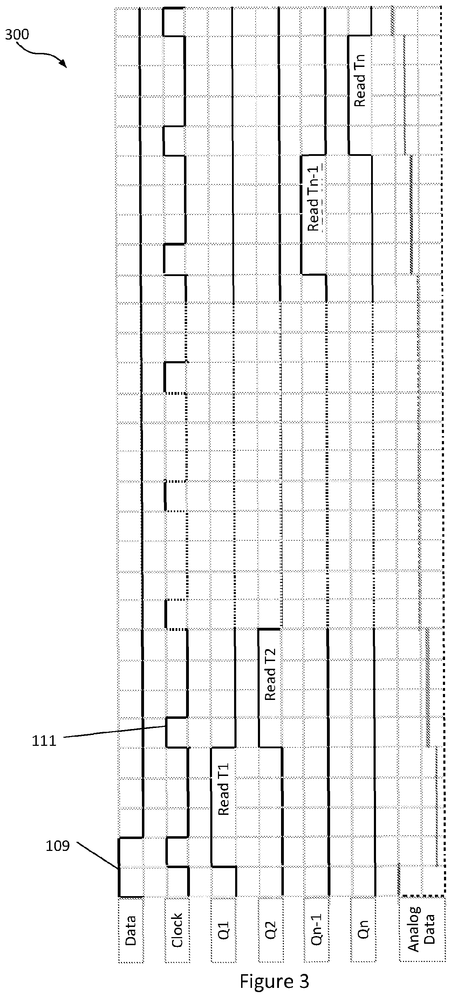

Figure 3 shows an exemplary pattern of waveforms that might propagate through a sensor of N sensing elements 102 (which may comprise either a single segment 202 or multiple segments 202 ).

In an initial state, the latches 110 are all in a 0-binary state. An initial data pulse which comprises a single toggling event (e.g. a square wave) and which overlaps the leading edge of the first pulse of a clock signal 111 initiates the process. It will be appreciated that the falling edge of the clock signal 111 may also initiate the process. The initial data pulse is generated by the controller 112 is received by the input data channel of the first latch 110 in the array. This causes the latch 110 of the first switching element 108 to go into a 1 binary state which persists until the second clock cycle.

The centre of the initial data pulse may be aligned with the rising edge of the clock signal 111. Each rising edge of the clock signal 111 then selects the next sensing element. This may have the advantage of keeping the clock rate low in order to minimise electromagnetic radiation. Again, either the rising or falling edge may be used at each sensing element, although typically the same edge (either rising or falling) will be used for each sensing element.

The second clock cycle toggles the second latch 110 output to a 1 binary state whilst simultaneously resetting the first latch 110. This process continues so that the latch 110 outputs each display a binary 1 value in sequential order. Meanwhile, the analogue line starts out at the supply voltage level since none of the switching elements 108 are activated and so the voltage divider is in a high state. On commencement of the measurement process with the initial data pulse, the analogue voltage value steps according to the sensing element resistance value through which a current path is provided via each corresponding switching element 108 when activated by its associated latch output. The measurement module 106 samples the analogue output during the process to provide an array of sensor output values.

The measurement module 106 may determine the number of sensing elements 102 in the sensor arrangement 200 automatically. Since the temperature of a stratified hot water vessel is likely to be highest at the top of the vessel (corresponding to one end of the array) and the lowest at the bottom of the vessel (corresponding to the other end of the array). The temperature is also likely to monotonically rise from the bottom to the top of the vessel (although this may depend on the position of the heating element). The measurement module 106 can thus determine the number of sensors in the array based on where there is a large jump from a high temperature (at the top of the tank) to a low temperature (at the bottom of the tank) and thus identify the sensing elements 102 corresponding to the top and bottom of the sensor arrangement 200. This may permit simpler installation of the sensing arrangement since is reduces the need to calibrate or programme the measurement module 106 manually in dependence on the number of segments 202 chosen for that sensing arrangement. The measurement module 106, knowing the first and last elements in the array, may also determine the position of each sensing element in the array. By determining the number of sensing elements in the sensor, the measurement module may also determine the identity of the tank.

In a variant one of the sensing elements is replaced with a fixed resistor that provides an identifier of the tank to the measurement module (and thus the measurement module might be configured for different tanks). By identifying the tank, a more accurate picture of the temperature distribution of the tank and associated information may be calculated, for example, identifying a tank may permit the shape, width, volume or other characteristics of the tank to be factored into calculation of stored energy or the like.

In the case of a stratified temperature distribution, it is advantageous to provide a continuous interpolant function which can provide a continuous estimate of temperature values between the individual temperature measurements. Considering a linear dimension, x, down the vertical extent of the sensor or sensor arrangement 200, a hypothesis function can be determined which can then become an interpolant through application of a gradient descent algorithm. This is a typical technique to fit mathematical functions to datasets with an underlying physical model which will be understood by one skilled in the art. In the case of a stratified temperature distribution, an analytical solution to the heat equation may yield an equation with the following form:

$$T(x) = \frac{T_s - T_m}{2}\left[1 + \text{erf}\left(\frac{\frac{x}{L} - a}{b}\right)\right] + T_m + c$$

Where x is the linear position anywhere along the length of the sensor or sensor arrangement 200; Ts is the temperature of the bottom of the top of the strip; Tm is the temperature at the top of the strip and L is the total strip length. This particular solution involves the error function erf along with three coefficients of best fit: a, b and c, which can be iterated through application of the gradient descent algorithm to achieve best fit to the individual temperature measurements. This approach has a number of advantages, for example, an interpolant provides a good physical representation of a stratified temperature distribution and is therefore likely to provide the highest accuracy for the fewest number of discrete heating elements, and if any individual sensing element fails or experiences noise, the resulting error will be lower in comparison with spline or other classical interpolant function methods.

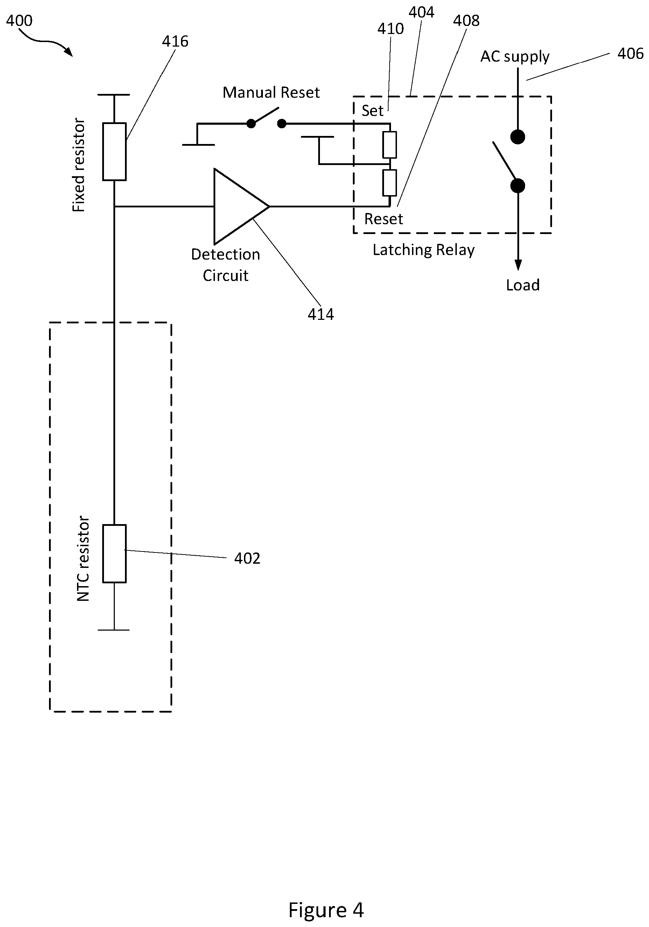

A further feature of a sensing arrangement which may be provided in combination with, or independently from, the above-described sensing arrangement is shown in Figure 4. A high limit thermal cutout 400 comprising a sensing element 402, in this case an NTC resistor, is fixed to the outside of the water vessel. A high limit thermal cutout is provided primarily as a safety device to cut off power to a heating element when a threshold temperature (for example, corresponding to a dangerously hot temperature of water, or unsafe operating temperature of the vessel) is reached. Traditionally, thermal cutouts for hot water tanks are metal tube arrangements which are expensive and result in undesirable heat losses from the tank.

As illustrated in Figure 4, the thermal cutout 400 described herein comprises a latching relay 404 which is used to switch on or off the supply of power 406 to a heating element of the vessel. The latching relay 404 maintains its state when power is removed. A pulse on the reset pin 408 prompts the relay to move to an open configuration, i.e. one in which a circuit is broken to prevent the delivery of power to the heating element. A pulse on the set pin 410 prompts the relay to move to a closed configuration, i.e. one in which a circuit is completed to allow the delivery of power to the heating element. The open configuration is illustrated in Figure 4.

The latching relay 404 will maintain its present configuration (either open or closed) in the absence of a pulse on either set 410 or reset 408 pins, even in the event of a power cycle.

As illustrated, a detector may be provided connected to the latching relay. In particular, a detection circuit 414 is provided connected to the reset pin 408 of the latching relay 404. In detection of a particular temperature condition, for example a temperature in excess of a particular threshold, the detection circuit 412 generates a pulse to the reset pin 408 of the latching relay 404.

A sensing element 402 is mounted at a suitable location on the hot water tank vessel. The sensing element is connected the detection circuit 412. The sensing element 402 may be connected to a fixed resistor 416 in order to provide a voltage divider. The detection circuit 412 may be configured to detect a change in voltage or resistance across the potential divider in order to detect the temperature condition. When the temperature rises above a set threshold, the detection circuit 412 generates a pulse on the reset pin 408 of the relay causing it to open. The relay stays open until the manual reset switch is pressed which generates a pulse on the set pin of the relay causing it to close.

It will be appreciated that the thermal cutout may be provided as a part of the sensor or sensor arrangements 200 herein described. For example, the connection from the sensing element 402 of the thermal cutout to the fixed resistor 116 416 may be the same as that of the sensing arrangement for determining the temperature distribution. The sensing element 402 of the thermal cutout may similarly be provided connected to a switching element 108 and a corresponding latch, which may be connected to the cascade of latches 110 of the sensing arrangement.

The detection circuit 412 and latching relay 404 may thus be provided as part of, or as additional components of, the measurement module 106 of the sensing arrangement.

It will be understood that the present invention has been described above purely by way of example, and modifications of detail can be made within the scope of the invention.

It is described above how the measurement module may determine the number of sensing elements in the sensor, and the advantages this can afford. Determining the number of sensing elements in the sensor can be useful for sensors more generally, not only for the specific sensor described above. This is now described in more depth for a sensor formed of an array of sensing elements more generally.

For many purposes it can be useful to be able to measure or infer the state of charge of a hot water tank. For example, domestic hot water tanks heated electrically via an immersion heating element or heat pump provide a significant opportunity to electrical power grids for the purposes of absorbing surplus energy, in particular renewable energy such as solar PV and wind that can depend on weather and other factors outside the control of energy providers. Alternatively, during periods of high demand relative to power supply, hot water tank controllers can potentially defer using electrical power in order to provide a respite to the grid at a moment in time beyond which more generation is available in future to satisfy domestic hot water production requirements.

In determining whether an individual hot water tank is able to defer heating or absorb heat, e.g. to make sensible use of an electrical power grid surplus, it is useful to be able to measure or infer the state of charge of the hot water tank. As used herein, a state of charge, preferably means: 'how much thermal energy is there in a tank, and how much of that energy is usable, that is, available for the production of hot water above a useable temperature?' Knowing the state of charge of the tank, along with the historic profile of hot water consumption, allows a control system to determine whether or not a surplus or deficit in generation can be accommodated in the heating strategy over a given time period.

One approach for controlling a hot water tank in dependence on electrical power grid performance can be achieved with some form of connectivity for a central controller connected to 100s or 1000s of tanks. Another approach involves a fairly sophisticated local controller to allow individual systems to decide whether or not to respond to a market price signal or a local power grid measurement, in which case the system requires suitable devices for monitoring grid data, e.g. connectivity devices, or grid sensing hardware. Such a local controller adds cost.

Conventional hot water tanks can operate without a connected electronics platform. For example, a conventional electrically heated hot water tank is able to operate with a simple, mechanical thermostat in conjunction with a resistive immersion element. A conventional gas or heat-pump heated hot water tank may have a coil inside the tank with a pocket to accommodate a water temperature sensor connected to an outboard heat pump or gas boiler without any additional electronics or connectivity.

Conventional hot water tanks are fixed appliances which are typically installed for 10 to 20 years or more. Over that time frame, the primary heating source may change where the system is heated externally. In addition, as energy grids decarbonise, many conventional hot water tanks installed today may have a dormant back-up electric heating element. In future a gas boiler may be decommissioned and the back-up electric heating element becomes the primary heat source exploiting lower carbon electricity. Unfortunately such a conventional system may be unable to provide much demand side flexibility to the grid as there is no simple way to measure or infer the state of charge without cumbersome retrofitting of an array of sensing elements.

The inventors have recognised that it can be advantageous for a conventional tank to be fitted with a state of charge sensor which can be connected at any point of time during the lifetime of the tank to a separate controller for advanced control depending on the state of charge of the tank (e.g. for grid-dependent control). Conventionally when an array of sensing elements is retrofitted to a tank the specifics of the sensor and the tank are known and can be provided to the controller at the time of the retrofit. By contrast in a tank pre-fitted with an array of sensing elements the specifics may no longer be evident or readily available.

It is therefore advantageous for the sensor to provide, on connecting the separate controller, identifying information to the controller about the tank and the sensor such as:

- a number of sensing elements in the sensor
- a length of the array of sensing elements
- a position of each sensing element in the array
- a tank volume, e.g. based on a length of the sensor
- a tank characteristic such as a footprint
- a number of electric heating elements
- whether the tank works with a gas boiler

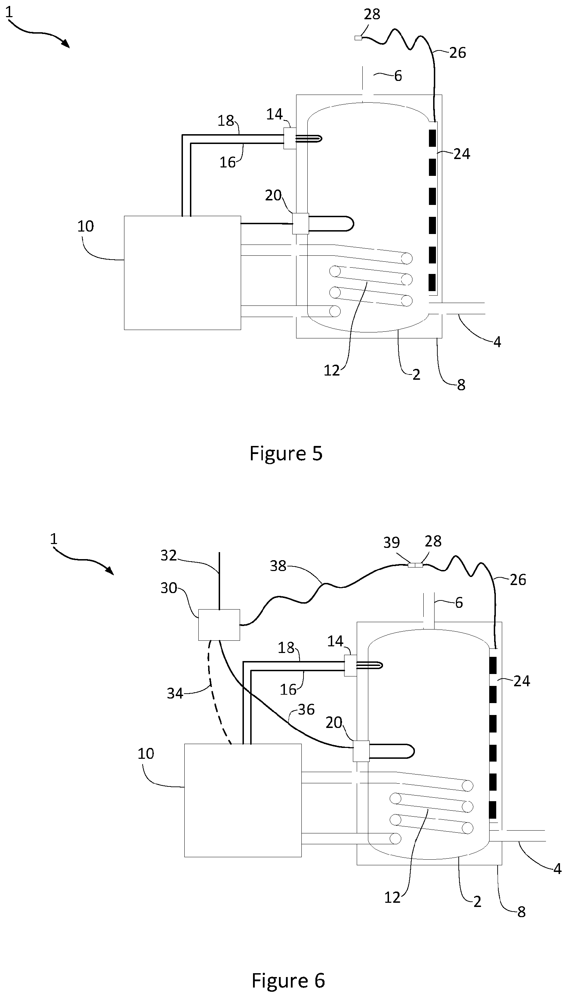

Figures 5 and 6 show a water heating system 1 comprising a vessel or tank 2 with a sensor 24 installed ready for use with a retrofittable tank controller 30. Figure 5 shows the water heating system 1 prior to installation of a retrofittable tank controller 30. Figure 6 shows the water heating system 1 after installation of a retrofittable tank controller 30.

The tank 2 has a cold water inlet 4 towards the bottom of the tank for drawings in cold water from the main supply and a hot water outlet 6 arranged towards the top of the tank for drawing off hot water for use.

The illustrated water heating system 1 has two heat sources for heating water in the tank 2. One of the heat sources is a gas boiler 10 which delivers heat to water in the tank via a heat exchanger, in this case a coil 12 disposed in the lower portion of the tank. The second heat source is an electrical heating element 20 arranged to directly heat the water in the tank. The electrical heating element 20 is arranged above the coil 12 in the tank.

In the illustrated example a mechanical thermostat 14 is provided in an upper portion of the tank. The mechanical thermostat is configured to sense the temperature of water in the tank and a switched live signal is transmitted from the thermostat to the gas boiler 10 via the switched live return portion of the switched live circuit 16, 18 to sense whether the water temperature is too high or too low so that the gas boiler may act accordingly. The mechanical thermostat may have a non-resettable high limit.

A sensor 24 is provided with the tank for sensing a plurality of temperatures of the tank. Operation of the heating system 1 can be achieved without using the sensor 24, as illustrated in Figure 5. In this configuration the sensor is dormant and not in use, for instance during an initial phase of the water heating system's use. The sensor is configured to connect to a retrofittable tank controller 30 which may be added to the water heating system at a later date.

The sensor 24 comprises a plurality of temperature sensing elements arranged along the height of the tank. It will be appreciated that the sensor may comprise fewer or more temperature sensing elements, or that the temperature sensing elements may be arranged otherwise than illustrated.

The individual temperature sensing elements of the sensor 24 may for example include thermistors (also known as resistance temperature detectors) such as positive temperature coefficient thermistors, thermocouples or temperature sensing ICs (integrated circuits).

The sensing elements may be located outside the tank, e.g. on or near the tank wall, as illustrated in Figure 5. In another example the sensing elements are each located within individual pockets protruding into the tank. In this example a number of apertures are provided along the tank wall, with pockets that protrude into the tank for receiving the sensing elements. Pockets can be attached to the tank wall e.g. by welding or with threaded couplings. The ports may include threaded fittings for mounting a sensing element into a pocket. In another example an aperture is provided at or near the top of the tank, and the assembly of sensing elements is provided depending from the top of the tank into the tank interior, optionally in a protective sheath.

In an example sensing elements are provided such that they are spaced at regular intervals of around 10 cm along the height of the tank. A greater spacing between the bottom of the tank and the lowest sensing element and a smaller spacing between the top of the tank and the uppermost sensing element may be selected. A wide variety of other spacings may be selected, be it closer together, farther apart, with more or less regular intervals. In an example the electrical heating element 20 is arranged around mid-height of the tank, but other arrangements are suitable too.

The sensor may comprise a plurality of individual temperature sensing elements affixed to a flexible circuit on board an adhesive tape referred to as a 'sensing strip'. The sensor may be formed of a linear array of sensing elements which are addressable through a series of clocked shift registers as discussed above.

In the illustrated example the sensor 24 is provided with a flying lead 26 which may be used to connect the retrofittable tank controller in order for signals to be provided from the sensor 24 to the retrofittable tank controller 30.

The sensor 24 can have a connector 28 on one end which mates with a corresponding connecter 39 on the end of a flying lead 38 or connecting cable from the retrofittable tank controller 30. In the illustrated example the flying lead 38 is not easily removable from the sensor 24 and they form an integral part, but in other examples the sensor 24 merely provides a connector at the end of the array of sensing elements, for instance on or next to a sensing strip, without a flying lead between the connector and the sensing elements. In this variant a suitable cable with a mating connector can be attached to or removed from the connector at the end of the array of sensing elements for connection to the retrofittable tank controller 30.

In Figure 6 the water heating system 1 is shown in a configuration with a retrofittable tank controller 30. The retrofittable tank controller 30 is shown with an input 32 for receiving data for more sophisticated control, e.g. concerning state of a power source such as electrical grid. In the illustrated example the retrofittable tank controller 30 has a mating connector 39 for connecting to the connector 28 at the end of the flying lead 26 attached to the sensor 24. The retrofittable tank controller 30 may further be connected to the electric heater 20 by an electric heater control line 36. The retrofittable tank controller 30 may also be connected to the gas boiler 10 by a gas boiler control line 34. These control lines can be installed when retrofitting the tank controller 30, and can permit the controller to control operation of the gas boiler 10 and the electric heater 20, in addition to the switched live circuit 16, 18 permitting the gas boiler to act in response to the mechanical thermostat 14.

The controller 30 is configured to identify characteristics of the water heating system from the sensor, in particular characteristics of the sensor and the tank. These characteristics can be used for determining the state of charge, that is, a quantity of useable heat stored in the vessel, that is, heat above a useable temperature threshold.

The characteristics may be available to the controller by virtue of operation of the sensor (e.g. the number of sensing elements in an array), and/or they may be made available to the controller by way of an identifier that is part of the water heating system. The identifier may form part of the sensor. The identifier may provide the controller with the one or more characteristics of the tank, such as the tank's size, the number of temperature sensing elements in the sensor, whether the tank works with a gas boiler etc.; or the identifier may encode these characteristics for lookup by the controller.

In some examples the identifier may comprise a machine readable label such as barcode or QR code or another visual identifier. Such an identifier may be affixed to the tank. During installation of the controller the installer can, e.g. via an installer commissioning app, scan the machine readable label for providing to the controller. In some examples the identifier may comprise a human readable label that permits the installer to enter manually, e.g. via an installer commissioning app, information to provide tank characteristics to the controller. Some characteristics of the water heating system - e.g. currently operational heat sources - may be provided to the controller otherwise, e.g. by an installer configuring the controller.

In some examples the sensor includes an electrical component that encodes a characteristic of the water heating system, such as a tank characteristic (e.g. tank volume, tank footprint, tank height, sensing element spacing). The encoding can be simply by selection of a parameter such as fixed resistance in a series of clocked shift registers, or it can involve more sophisticated electrical componentry such as an electrically erasable programmable read-only memory (EEPROM).

In an example, the sensor comprises an array of sensing elements as described in detail above, and further includes an encoding element, e.g. at an end of the array for installation at the base of a tank. The encoding element is arranged in the topology similar as a sensing elements except in that a fixed value resistor takes the place of the element having a temperature-dependent parameter. A certain fixed value resistor can be used to encode for example a slimline type tank, another fixed value resistor can be used to encode for example a standard type tank; the tank diameter can then be looked up based on the determined tank height. In another example a certain fixed value resistor can be used to encode for example a certain tank diameter. Many other topologies can be used to include an electrical component that encodes a characteristic of the water heating system, whether or not incorporated with the sensor. For instance a separate circuit with its own tracks and connections can be included, and probing of that separate circuit can permit the controller to determine the encoded characteristics of the water heating system.

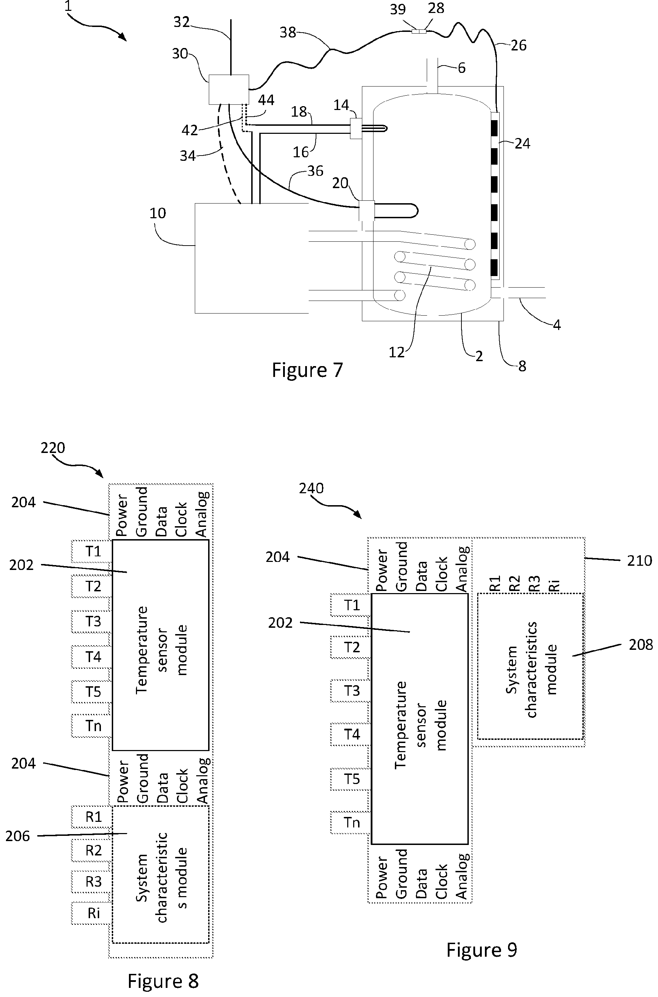

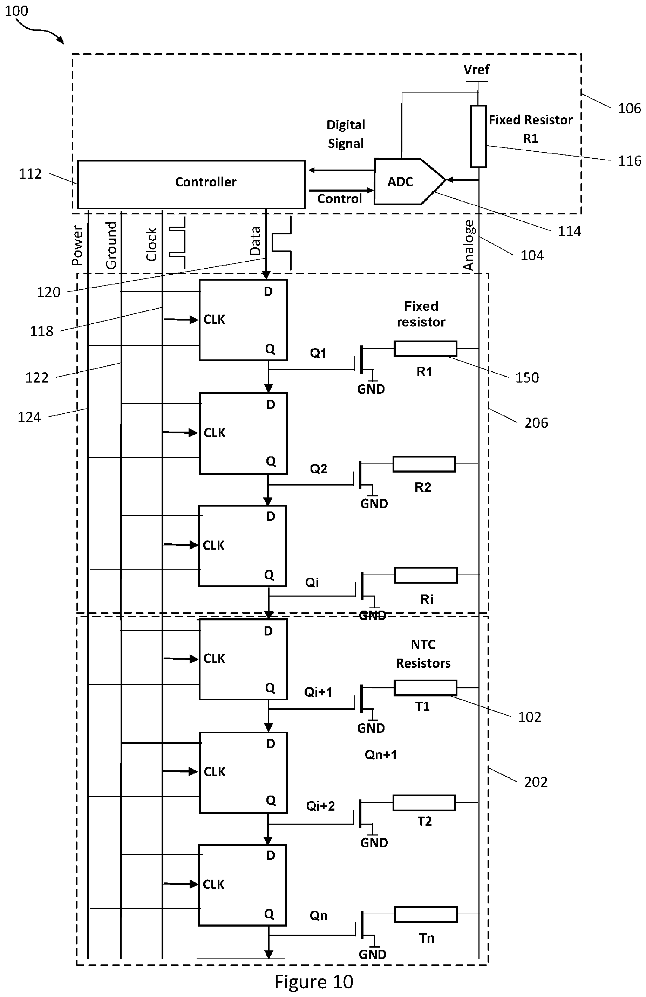

Figure 8 shows an example where the sensor 220 includes a temperature sensor module 202 as described above with reference to Figure 1, and a system characteristics module 206 as illustrated in more detail in Figure 10. In the system characteristics module 206 a number of fixed value resistors 150 R1 to Ri can be used to encode a tank characteristic. Figure 9 shows an example where the sensor 240 includes a temperature sensor module 202 as described above with reference to Figure 1, and a system characteristics module 208 with a separate set of outputs. In the illustrated example the system characteristics module 208 has a topography such that at each of the output lines 210 a readout can be obtained that encodes a tank characteristic (e.g. resistances R1, R2, R3, ... Ri). The system characteristics module 208 may instead use the same topography as the system characteristics module 206 as illustrated in more detail in Figure 10, with a series of clocked shift registers; in this case the output lines are same as described above (power, ground, data, clock, analog). For the sensor a wide variety of circuit topographies can be used generally.

In the example illustrated in Figure 6 a mechanical thermostat 14 provides a signal to the boiler 10 to indicate if the water temperature is too high or too low. Figure 7 shows an alternative arrangement where additional connections 42, 44 are provided to connect the controller 30 in series into the switched live circuit with the mechanical thermostat 14 and the boiler 10. This can permit the retrofittable tank controller 30 to turn the boiler on and off whilst making use of the safety high limit protection already in place.

The location of the sensing elements (e.g. at single fixed points or within an extensible, flexible strip) relative to the tank and locations of thermal inputs to the tank can have a bearing on the accuracy of the state of charge measurement. The relative location of heating inputs or indeed the sensor location itself can be subject to manufacturing tolerances. Consequently a self calibration routine may be included. Self-calibration can permit identification of relevant information for control such as when the tank is fully charged, and/or a sensor location which corresponds to the lowest heating input location. For example, if an individual sensing element happens to be located higher than an assumed model then it may consistently record a temperature higher than a theoretical temperature profile model would predict for its assumed location, and accordingly the estimated state of charge may become inaccurate. Self-calibration can permit the controller to find a more accurate reference for estimating the state of charge. Self-calibration can permit the controller to determine a maximum useable heat capacity of the water heating system, that is, how much heat the system can safely accept and store, and how much of that heat is actually useable or at or above a useable temperature threshold.

In an example, the self-calibration routine involves applying heat to the tank (without any water being drawn) until a state of maximum heat storage, also referred to as a 'fully charged' state, is reached. The measured temperature profiles can permit determination of a 'fully charged' reference.

A tank may be considered 'fully charged' once a certain temperature is achieved at a certain level, e.g. at or near or marginally below the top of the tank, to prevent overheating. In another example a tank is considered 'fully charged' once a certain temperature (e.g. a useful temperature) is achieved at or near or marginally higher than the level of the lowest thermal input, to ensure a high proportion of the tank has been heated. In some examples this may involve applying heat for a maximum period of time, after which further transfer of heat can become ineffective (e.g. for heat sources providing relatively low temperature heat inputs).

Some sensing elements may be located lower than the lowest heat input, and as at that level only marginal heating may be achieved, data from those sensors may be disregarded for determining the state of charge. This can ensure that the relative state of charge - e.g. 40% maximum heat capacity - reflects the actually heatable volume in the tank, without including the proportion that may not be effectively heatable.

For determining the state of charge the data from the different sensing elements may be smoothed, e.g. with moving averages, so that the data from a number of neighbouring sensing elements is considered rather than each sensing element individually.

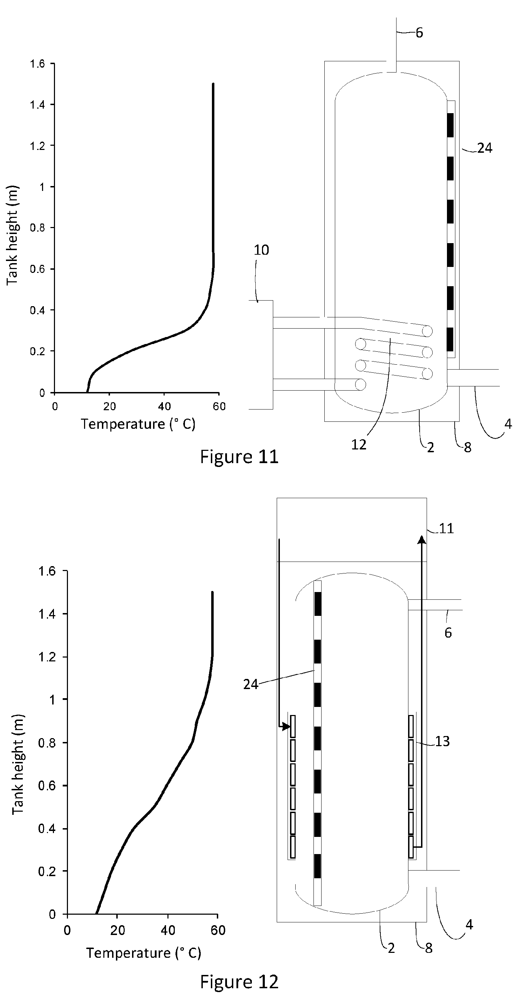

The self-calibration routine may include analysis of the temperature profile in order to identify the heat source. For example heat pumps often provide heat at a lower temperature, which can result in a more sloped temperature profile than for instance with a gas boiler. Figure 11 shows typical temperature profile in a tank with a gas boiler 10 as heat source. Figure 12 shows typical temperature profile in a tank with a heat pump 11 as heat source and a condenser 13 wrapped around the outside the tank 2 for heat transfer to the tank. A tank with a two or more heat inputs at different locations can also be identified by way of the temperature profile.

In a variant of the water heating system 1 a blending valve is provided at the hot water outlet 6. Such a blending valve typically has a target output temperature according to which water is blended. The controller may be adapted to receive an indication of the target output temperature used in the blending valve, e.g. directly from the blending valve by way of a suitable connection, or via installer input when the controller is configured. The controller can then select the threshold temperature (i.e. the temperature above which heated water is considered useful, also referred to herein as the 'useful temperature') for determining the state of charge to correspond to the target output temperature for the blending valve. This is particularly convenient as it can harmonise the performance of the tank with the requirements of the blending valve and the calculated state of charge accurately reflects the quantity of useful heat stored in the tank.

The invention may include one or more of the following features in any suitable combination, provided that it falls within the scope of the appended claims:

- A hot water tank which is capable of operating with a mechanical thermostat, internal electric heat source and/or external heat source without embedded electronics which has been pre-fitted with a state of charge sensor which can in future retrofitted to a DSR controller
- A retrofittable tank controller which can be fitted to a hot water tank with a pre-fitted state of charge sensor and in turn control an internal electric heat source or external heat source whilst optimising the time of heating with respect to measured usage behaviour and an energy price signal
- the state of charge sensor comprises a plurality of temperature sensing elements inserted into pockets within the tank
- the state of charge sensor comprises a plurality of temperature sensing elements arranged linearly along a flexible circuit which adheres to the tank wall via an adhesive tape
- a sensor as described above
- self identification on the basis of the strip (how big the tank is, what heat sources does it have etc, how long is the strip)
- self identification is determined by a preset resistor value on the strip which maps to the tank's technical characteristic
- self identification is determined by a programmable EEPROM chip which is programmed with the tank's identifying characteristics which are subsequently read off from the DSR controller when fitted to the tank in future
- a self calibration routine is provided for in order to ensure that the location of the sensing elements relative to the tank shell and heat input locations are factored in
- the or a self calibration routine involves heating the tank from cold to fully hot where an upper temperature measurement made above the highest heat source input location is used to determine the upper temperature reference used to determine the tank's 'full charge level' against a temperature distribution sensed by the remaining sensing elements
- the or a calibration can be undertaken through remote inspection and interrogation of the temperature profile relative to the reported state of charge value
- a system including additional cables to pass a boiler switched live cable through the existing high limit over temperature thermostat to both control the boiler and make use of the existing mechanical protective thermostat

It will be understood that the invention has been described above purely by way of example, and modifications of detail can be made within the scope of the appended claims. For instance, while the examples refer to heat sources including gas boilers, electrical immersion heating elements and heat pumps as heat sources, it will be appreciated that a wide variety of heat sources can be used, singly or in suitable combinations.

While mention is made of between 8 to 12 sensors located at even linear intervals a typical domestic hot water tank, and 20 or more sensors for larger commercial applications, it will be appreciated that the invention described above may include fewer sensors, e.g. 2 or more.

## Claims

1. A water heating system (1) comprising:

a vessel for holding water (2) and for receiving heat from one or more heat sources (10) for heating water in the vessel (2);
a sensor (24) comprising a plurality of temperature sensing elements for sensing a distribution of temperatures in the vessel;
a connector (28) for connecting the sensor (24) to a retrofittable tank controller (30); and
wherein the water heating system (1) is configured to provide one or more characteristics of the water heating system (1) to a retrofittable tank controller (30) such that a retrofittable tank controller (30) connected to the sensor (24) and in receipt of the characteristics of the water heating system (1) can determine from the distribution of temperatures in the vessel (2) a quantity of useable heat stored in the vessel (2); wherein the water heating system (1) further comprises one or more of:

one or more fixed value resistors encoding the one or more characteristics of the water heating system (1);
an EEPROM programmed with the one or more characteristics of the water heating system (1); or
a visual identifier configured to encode the one or more characteristics of the water heating system (1).

2. A water heating system (1) according to Claim 1, wherein the sensor (24) is configured to provide one or more characteristics of the water heating system (1) to a retrofittable tank controller (30).

3. A water heating system (1) according to any preceding claim, wherein the one or more characteristics comprise one or more of: a characteristic of the vessel (2); a volume of the vessel (2); a height of the vessel (2); a diameter or width of the vessel (2); an indication of a footprint of a vessel (2); a manufacturer of the vessel (2); an identity of the vessel (2); a shape of the vessel (2); a characteristic of the one or more heat sources (10); a number of heat sources (10); a type or types of the heat sources (10); a characteristic of the sensor (24); a number of temperature sensing elements of the sensor (24); a length of the sensor (24); and a spacing between temperature sensing elements of the sensor (24).

4. A water heating system (1) according to any preceding claim, wherein the sensor (24) is configured to provide a height of the vessel (2) or a number of temperature sensing elements of the sensor (24) or a length of the sensor (24) or a vessel (2) volume based on a length of the sensor (24) to a retrofittable tank controller (30).

5. A water heating system (1) according to Claim 4, wherein the sensor (24) or another means is configured to provide an indication of a footprint of the vessel (2) and optionally a characteristic of the one or more heat sources (10) to a retrofittable tank controller (30).

6. A water heating system (1) according to any preceding claim comprising a mechanical thermostat (14) with a non-resettable high limit for controlling one or more heat sources (10) for heating water in the vessel (2) in a configuration without a retrofittable tank controller (30).

7. A water heating system (1) according to any preceding claim comprising one or more heat sources (10) for heating water in the vessel (2), optionally one or more of: an electric heater (20) disposed in the vessel (2); a gas boiler; a heat pump; a solar thermal device; and a solar photovoltaic device.

8. A water heating system (1) according to Claim 7 when dependent on Claim 6, wherein the one or more heat sources (10) is configured to provide heat to the vessel (2) in dependence on the mechanical thermostat (14), and optionally wherein a connection between the one or more heat sources (10) and the mechanical thermostat (14) comprises a node for connection of a retrofittable tank controller (30).

9. A water heating system (1) according to any preceding claim, wherein the sensor (24) comprises one or more of: a flexible substrate; a flexible circuit; an adhesive layer for attachment of the sensor (24) to the vessel (2); and a flexible printed circuit board.

10. A water heating system (1) according to any preceding claim, wherein the sensor (24) comprises an array of sensing elements (102), each element having a temperature-dependent parameter; a cascaded array of latches (110), each latch being configured to control a switching element (108) corresponding to a one of the sensing elements (102) thereby to selectively provide a current path to the one of the sensing elements (102); a signal line (104) to which each of the sensing elements (102) is electrically connected for providing a signal to a measurement module.

11. A water heating system according to any one of claims 1 to 10, further comprising a retrofittable tank controller.

**Patentansprüche**

1. Warmwassersystem (1), das Folgendes umfasst:

einen Behälter zum Lagern von Wasser (2) und zum Aufnehmen von Wärme aus einer oder mehreren Wärmequellen (10) zum Erwärmen des Wassers in dem Behälter (2);
einen Sensor (24), der eine Mehrzahl von Temperaturerfassungselementen zum Erfassen einer Verteilung von Temperaturen in dem Behälter umfasst;
einen Stecker (28) zum Verbinden des Sensors (24) mit einer nachrüstbaren Tanksteuervorrichtung (30); und

wobei das Warmwassersystem (1) dazu konfiguriert ist, eine oder mehrere Eigenschaften des Warmwassersystems (1) an eine nachrüstbare Tanksteuervorrichtung (30) bereitzustellen, sodass eine mit dem Sensor (24) verbundene nachrüstbare Tanksteuervorrichtung (30) und mit Empfang der Eigenschaften des Warmwassersystems (1) von der Verteilung der Temperaturen in dem Behälter(2) eine in dem Behälter (2) gespeicherte Menge an nutzbarer Wärme bestimmen kann;

wobei das Warmwassersystem (1) ferner eines oder mehrere von Folgendem umfasst:

einem oder mehreren Festwertwiderständen, die die eine oder die mehreren Eigenschaften des Warmwassersystems (1) kodieren;

einem EEPROM, der mit einem oder mehreren Eigenschaften des Warmwassersystems (1) programmiert ist; oder

einem visuellen Bezeichner, der dazu konfiguriert ist, die eine oder die mehreren Eigenschaften des Warmwassersystems (1) zu kodieren.

2. Warmwassersystem (1) nach Anspruch 1, wobei der Sensor (24) dazu konfiguriert ist, eine oder mehrere Eigenschaften des Warmwassersystems (1) an eine nachrüstbare Tanksteuervorrichtung (30) bereitzustellen.

3. Warmwassersystem (1) nach einem der vorstehenden Ansprüche, wobei die eine oder die mehreren Eigenschaften eines oder mehrere von Folgendem umfassen: einer Eigenschaft des Behälters (2); einem Volumen des Behälters (2); einer Höhe des Behälters (2); einem Durchmesser oder einer Breite des Behälters (2); einer Angabe einer Grundfläche eines Behälters (2); einem Hersteller des Behälters (2); einer Identität des Behälters (2); einer Form des Behälters (2); einer Eigenschaft der einen oder der mehreren Wärmequellen (10); einer Anzahl von Wärmequellen (10); einer Art oder Arten der Wärmequellen (10); einer Eigenschaft des Sensors (24); einer Anzahl von Temperaturerfassungselementen des Sensors (24); einer Länge des Sensors (24); und einer Beabstandung zwischen Temperaturerfassungselementen des Sensors (24).

4. Warmwassersystem (1) nach einem der vorstehenden Ansprüche, wobei der Sensor (24) dazu konfiguriert ist, einer nachrüstbaren Tanksteuervorrichtung (30) eine Höhe des Behälters (2) oder eine Anzahl der Temperaturerfassungselemente des Sensors (24) oder eine Länge des Sensors (24) oder ein Volumen des Behälters (2) auf Grundlage einer Länge des Sensors (24) bereitzustellen.

5. Warmwassersystem (1) nach Anspruch 4, wobei der Sensor (24) oder ein anderes Mittel dazu konfiguriert ist, einer nachrüstbaren Tanksteuervorrichtung (30) optional eine Angabe einer Grundfläche des Behälters (2) und optional eine Eigenschaft der einen oder der mehreren Wärmequellen (10) bereitzustellen.

6. Warmwassersystem (1) nach einem der vorstehenden Ansprüche, das einen mechanischen Thermostat (14) mit einer nicht rückstellbaren Obergrenze für die Steuerung einer oder mehrerer Wärmequellen (10) zum Erwärmen von Wasser in dem Behälter (2) in einer Konfiguration ohne nachrüstbare Tanksteuervorrichtung (30) umfasst.

7. Warmwassersystem (1) nach einem der vorstehenden Ansprüche, das eine oder mehrere Wärmequellen (10) zum Erwärmen von Wasser in dem Behälter (2) umfasst, optional eines oder mehrere von Folgendem: einer in dem Behälter (2) angeordneten elektrischen Heizvorrichtung (20); einem Gaskessel; einer Wärmepumpe; einer solarthermischen Vorrichtung; und einer solaren Photovoltaikvorrichtung.

8. Warmwassersystem (1) nach Anspruch 7, wenn von Anspruch 6 abhängig, wobei die eine oder die mehreren Wärmequellen (10) dazu konfiguriert ist/sind, dem Behälter (2) Wärme in Abhängigkeit von dem mechanischen Thermostat (14) bereitzustellen, und wobei optional eine Verbindung zwischen der einen oder den mehreren Wärmequellen (10) und dem mechanischen Thermostat (14) einen Knoten für die Verbindung einer nachrüstbaren Tanksteuervorrichtung (30) umfasst.

9. Warmwassersystem (1) nach einem der vorstehenden Ansprüche, wobei der Sensor (24) eines oder mehrere von Folgendem umfasst: einem flexiblen Substrat; einer flexiblen Schaltung; einer Klebeschicht für die Befestigung des Sensors (24) an dem Behälter (2); und einer flexiblen Leiterplatte.

10. Warmwassersystem (1) nach einem der vorstehenden Ansprüche, wobei der Sensor (24) Folgendes umfasst: eine Anordnung von Erfassungselementen (102), wobei jedes Element einen temperaturabhängigen Parameter aufweist; eine kaskadierte Anordnung von Riegeln (110), wobei jeder Riegel dazu konfiguriert ist, ein Schaltelement (108) zu steuern, das einem der Erfassungselemente (102) entspricht, um dadurch selektiv einen Strompfad zu dem einen der Erfassungselemente (102) bereitzustellen; eine Signalleitung (104), mit der jedes der Erfassungselemente (102) elektrisch verbunden ist, um ein Signal an ein Messmodul bereitzustellen.

11. Warmwassersystem nach einem der Ansprüche 1 bis 10, das ferner eine nachrüstbare Tanksteuervorrichtung umfasst.

**Revendications**

1. Système de chauffage d'eau (1) comprenant :

   un récipient pour contenir de l'eau (2) et pour recevoir la chaleur provenant d'une ou de plusieurs sources de chaleur (10) pour chauffer l'eau dans le récipient (2) ;
   un capteur (24) comprenant une pluralité d'éléments de détection de température pour détecter une distribution de températures dans le récipient ;
   un connecteur (28) pour connecter le capteur (24) à un dispositif de commande de cuve pouvant être installé a posteriori (30) ; et
   dans lequel le système de chauffage d'eau (1) est configuré pour fournir une ou plusieurs caractéristiques du système de chauffage d'eau (1) à un dispositif de commande de cuve pouvant être installé a posteriori (30) de telle sorte que le dispositif de commande de cuve pouvant être installé a posteriori (30) connecté au capteur (24) et recevant les caractéristiques du système de chauffage d'eau (1) puisse déterminer à partir de la distribution de températures dans le récipient (2) une quantité de chaleur utilisable stockée dans le récipient (2) ;
   dans lequel le système de chauffage d'eau (1) comprend en outre un ou plusieurs parmi :

   une ou plusieurs résistances à valeur fixe codant les une ou plusieurs caractéristiques du système de chauffage d'eau (1) ;
   une EEPROM programmée avec les une ou plusieurs caractéristiques du système de chauffage d'eau (1) ; ou
   un identifiant visuel conçu pour coder les une ou plusieurs caractéristiques du système de chauffage d'eau (1).

2. Système de chauffage d'eau (1) selon la revendication 1, dans lequel le capteur (24) est configuré pour fournir une ou plusieurs caractéristiques du système de chauffage d'eau (1) à un dispositif de commande de cuve pouvant être installé a posteriori (30).

3. Système de chauffage d'eau (1) selon une quelconque revendication précédente, dans lequel les une ou plusieurs caractéristiques comprennent un ou plusieurs parmi : une caractéristique du récipient (2) ; un volume du récipient (2) ; une hauteur du récipient (2) ; un diamètre ou une largeur du récipient (2) ; une indication d'un encombrement au sol d'un récipient (2) ; un fabricant du récipient (2) ; une identité du récipient (2) ; une forme du récipient (2) ; une caractéristique des une ou plusieurs sources de chaleur (10) ; un nombre de sources de chaleur (10) ; un type ou des types des sources de chaleur (10) ; une caractéristique du capteur (24) ; un nombre d'éléments de détection de température du capteur (24) ; une longueur du capteur (24) ; et un espacement entre les éléments de détection de température du capteur (24).

4. Système de chauffage d'eau (1) selon une quelconque revendication précédente, dans lequel le capteur (24) est configuré pour fournir une hauteur du récipient (2) ou un nombre d'éléments de détection de température du capteur (24) ou une longueur du capteur (24) ou un volume du récipient (2) sur la base d'une longueur du capteur (24) à un dispositif de commande de cuve pouvant être installé a posteriori (30).

5. Système de chauffage d'eau (1) selon la revendication 4, dans lequel le capteur (24) ou un autre moyen est configuré pour fournir une indication d'un encombrement au sol du récipient (2) et éventuellement une caractéristique des une ou plusieurs sources de chaleur (10) à un dispositif de commande de cuve pouvant être installé a posteriori (30).

6. Système de chauffage d'eau (1) selon une quelconque revendication précédente comprenant un thermostat mécanique (14) doté d'une limite haute non réinitialisable pour commander une ou plusieurs sources de chaleur (10) pour chauffer l'eau dans le récipient (2) dans une configuration sans dispositif de commande de cuve pouvant être installé a posteriori (30).

7. Système de chauffage d'eau (1) selon une quelconque revendication précédente comprenant une ou plusieurs sources de chaleur (10) pour chauffer l'eau dans le récipient (2), éventuellement un ou plusieurs parmi : un élément chauffant électrique (20) disposé dans le récipient (2) ; une chaudière à gaz ; une pompe à chaleur ; un dispositif solaire thermique ; et un dispositif solaire photovoltaïque.

8. Système de chauffage d'eau (1) selon la revendication 7 prise en dépendance de la revendication 6, dans lequel les une ou plusieurs sources de chaleur (10) sont configurées pour fournir de la chaleur au récipient (2) en fonction du thermostat mécanique (14), et éventuellement dans lequel une connexion entre les une ou plusieurs sources de chaleur (10) et le thermostat mécanique (14) comprend un nœud pour la connexion d'un dispositif de commande de cuve pouvant être installé a posteriori (30).

9. Système de chauffage d'eau (1) selon une quelconque revendication précédente, dans lequel le capteur (24) comprend un ou plusieurs parmi : un substrat souple ; un circuit souple ; une couche adhésive la fixation du capteur (24) sur le récipient (2) ; et une carte de circuit imprimé souple.

10. Système de chauffage d'eau (1) selon une quelconque revendication précédente, dans lequel le capteur (24) comprend un réseau d'éléments de détection (102), chaque élément ayant un paramètre dépendant de la température ; un réseau en cascade de verrous (110), chaque verrou étant configuré pour commander un élément de commutation (108) correspondant à l'un des éléments de détection (102) pour de ce fait fournir sélectivement un chemin de courant vers l'élément des éléments de détection (102) ; une ligne de signal (104) à laquelle chacun des éléments de détection (102) est connecté électriquement pour fournir un signal à un module de mesure.

11. Système de chauffage d'eau selon l'une quelconque des revendications 1 à 10, comprenant en outre un dispositif de commande de cuve pouvant être installé a posteriori.

Figure 1

Figure 2

Figure 3

Figure 4

Figure 5

Figure 6

Figure 7

Figure 8

Figure 9

Figure 10

Figure 11

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020333045 A1
- US 2020408611 A1
- WO 2006053386 A1
- WO 2012081014 A1